# DEMANDE DE BREVET EUROPEEN

(11) **EP 0 881 109 A1**
(43) Date de publication de la demande: **02.12.1998**
(21) Numéro de dépôt: 98440111.7
(22) Date de dépôt: 26.05.1998
(51) Int. Cl.: B60H 1/34

(54) **Barillet d'aérateur pour un véhicule automobile**

(30) Priorité: 28.05.1997 FR 9706724
(71) Demandeur: MGI COUTIER (S.A.), F-01410 Champfromier (FR)
(72) Inventeur: Grenouillet, Patrick, 68220 Wentzwiller (FR)
(74) Mandataire: Nithardt, Roland

(57) **Abrégé**

La présente invention concerne un barillet d'aérateur (1) dont le volet d'obturation du conduit d'air et les ailettes (7) à l'avant du barillet sont commandés par le même organe de commande pour faciliter les manipulations, augmenter le confort d'utilisation et respecter la norme en vigueur.

Ce barillet d'aérateur (1) est caractérisé en ce que le levier de commande (9) est couplé simultanément à la barrette de commande (8) des ailettes verticales (7) et à un arbre de commande (16) du volet d'obturation du conduit d'air, au moyen respectivement d'une articulation (14, 15) prévue entre le levier (9) et la barrette de liaison (8) et d'un maneton excentrique (18) prévu sur l'arbre de commande (16) couplé à un bras de transmission (17) solidaire de la barrette de liaison (8), de telle manière à fermer le volet quand les ailettes verticales (7) sont fermées, à ouvrir le volet dans une première phase d'ouverture des ailettes verticales (7) et à le maintenir en position ouverte jusqu'à l'ouverture complète des ailettes (7).

Applications : Industrie automobile.

## Description

La présente invention concerne un barillet d'aérateur pour un véhicule automobile comportant un boîtier monté dans l'habitacle du véhicule à la sortie d'un conduit d'air, ce boîtier étant pourvu d'un volet d'obturation du conduit d'air, d'un premier jeu d'ailettes parallèles d'orientation du flux d'air disposé par exemple horizontalement à l'intérieur du boîtier et d'un second jeu d'ailettes parallèles d'orientation du flux d'air disposé par exemple verticalement à l'avant du boîtier, ces ailettes verticales étant montées pivotantes dans le boîtier autour d'axes de pivotement et reliées entre elles par une barrette de liaison en des points de liaison distants des axes de pivotement d'une distance D, cette barrette de liaison étant couplée à un levier de commande accessible en face avant du barillet et une paroi frontale terminant le montage du barillet dans l'habitacle.

La plupart des barillets d'aérateur sont équipés de plusieurs systèmes de commande : un système pour le volet du conduit d'air, un autre système pour le premier jeu d'ailettes et un dernier système pour le second jeu d'ailettes. Dans le cas d'un barillet d'aérateur dont les ailettes à l'avant du boîtier peuvent fermer totalement la sortie d'air, il est conseillé de fermer simultanément le volet du conduit d'air. Si le volet reste ouvert quand les ailettes sont fermées, la circulation d'air génère des sifflements créant des nuisances sonores, ainsi que des contraintes mécaniques sur les ailettes pouvant à la longue modifier les jeux de fonctionnement. De plus, ces barillets doivent respecter la norme européenne ECE21 qui limite le dépassement des leviers ou boutons de commande en façade à une faible valeur par exemple inférieure à 3,5 mm, pour éviter les risques de blessure en cas d'accident.

Le but de la présente invention est d'éviter les inconvénients mentionnés ci-dessus en proposant un barillet dont le volet du conduit d'air et les ailettes à l'avant du barillet sont commandés par le même organe de commande pour faciliter les manipulations, augmenter le confort d'utilisation et éviter les désagréments mentionnés ci-dessus, tout en respectant la norme en vigueur.

Ce but est atteint par un barillet d'aérateur tel que défini en préambule et caractérisé en ce que le levier de commande est couplé simultanément à la barrette de commande des ailettes verticales et à un arbre de commande du volet d'obturation du conduit d'air, au moyen respectivement d'une articulation prévue entre le levier et la barrette de liaison et d'un maneton excentrique prévu entre le levier et l'arbre de commande, de telle manière à fermer le volet quand les ailettes verticales sont fermées, à ouvrir le volet dans une première phase d'ouverture des ailettes verticales et à le maintenir en position ouverte jusqu'à l'ouverture complète des ailettes.

Dans une forme de réalisation préférée de l'invention, le levier de commande est guidé en rotation à son extrémité arrière autour de l'arbre de commande du volet, et en translation dans sa partie avant par un plot solidaire du levier coulissant dans une lumière prévue dans le boîtier, de telle manière que l'extrémité avant du levier se déplace suivant une trajectoire sensiblement rectiligne et sensiblement parallèle à la face avant du barillet.

L'arbre de commande du volet est avantageusement monté pivotant dans le boîtier suivant un axe de pivotement perpendiculaire au plan dans lequel se déplace le levier et comporte le maneton excentrique couplé à la barrette de liaison par un bras de transmission, le maneton excentrique étant éloigné de l'axe de pivotement de l'arbre de commande d'une distance D' égale à la distance D existante entre les axes de pivotement des ailettes verticales et leurs points de liaison sur la barrette de liaison.

De préférence, l'arbre de commande comporte des moyens d'ouverture et de fermeture du volet du conduit d'air, ces moyens pouvant comporter une came disposée perpendiculairement à l'axe de pivotement de l'arbre de commande et pourvue d'un profil de came qui est croissant dans une première phase puis constant dans une seconde phase, ce profil de came comportant au départ une extrémité recourbée coopérant avec une rainure de forme complémentaire prévue sur le volet pour ramener et maintenir ce dernier en position fermée.

Dans une variante de réalisation, les moyens d'ouverture et de fermeture du volet peuvent comporter un doigt solidaire de l'arbre de commande coulissant dans une rainure dont la courbe est similaire à un profil de came prévue sur le volet ou inversement.

Dans la forme de réalisation préférée de l'invention, l'articulation prévue entre le levier de commande et la barrette de liaison comporte un plot solidaire du levier et coulissant dans une lumière transversale prévue dans la barrette, ce plot étant prévu dans une zone médiane du levier et décalé par rapport à la droite passant par l'axe de pivotement du levier et son plot de guidage en translation.

Toutes ou une partie des ailettes intérieures horizontales peuvent être fabriquées d'une seule pièce avec une molette de commande montée dans le boîtier et accessible en face avant du barillet, la molette étant maintenue en position par un doigt de maintien prévu à l'arrière de la paroi frontale.

Ces ailettes intérieures horizontales peuvent également être couplées à une molette de commande montée dans le boîtier et accessible en face avant du barillet par un organe de liaison charnière, cet organe étant couplé à la molette par un point de fixation excentré par rapport à l'axe de rotation de la molette. Cet organe de liaison charnière est de préférence réalisé dans une matière synthétique moulée et comporte plusieurs zones charnières formées par des zones de moindre épaisseur de matière.

La présente invention et ses avantages apparaîtront mieux dans la description suivante d'un exemple de réalisation, en référence aux dessins annexés, dans lesquels :
- la figure 1 est une vue de face du barillet selon rinvention,
- la figure 2 est une vue en coupe longitudinale du barillet selon la ligne II-II de la figure 5, les ailettes verticales étant en position fermée,
- la figure 3 est une vue similaire à celle de la figure 2, les ailettes verticales étant en position semi-ouverte,
- la figure 4 est une vue en coupe longitudinale du barillet selon la ligne IV-IV de la figure 6, les ailettes verticales étant en position ouverte,
- la figure 5 est une vue en coupe transversale du barillet de la figure 2, selon la ligne V-V,
- la figure 6 est une vue en coupe transversale du barillet de la figure 3, selon la ligne VI-VI,
- la figure 7 est une vue en coupe transversale du barillet de la figure 3, selon la ligne VII-VII, et
- la figure 8 est une vue similaire à celle de la figure 7 d'une autre forme de réalisation.

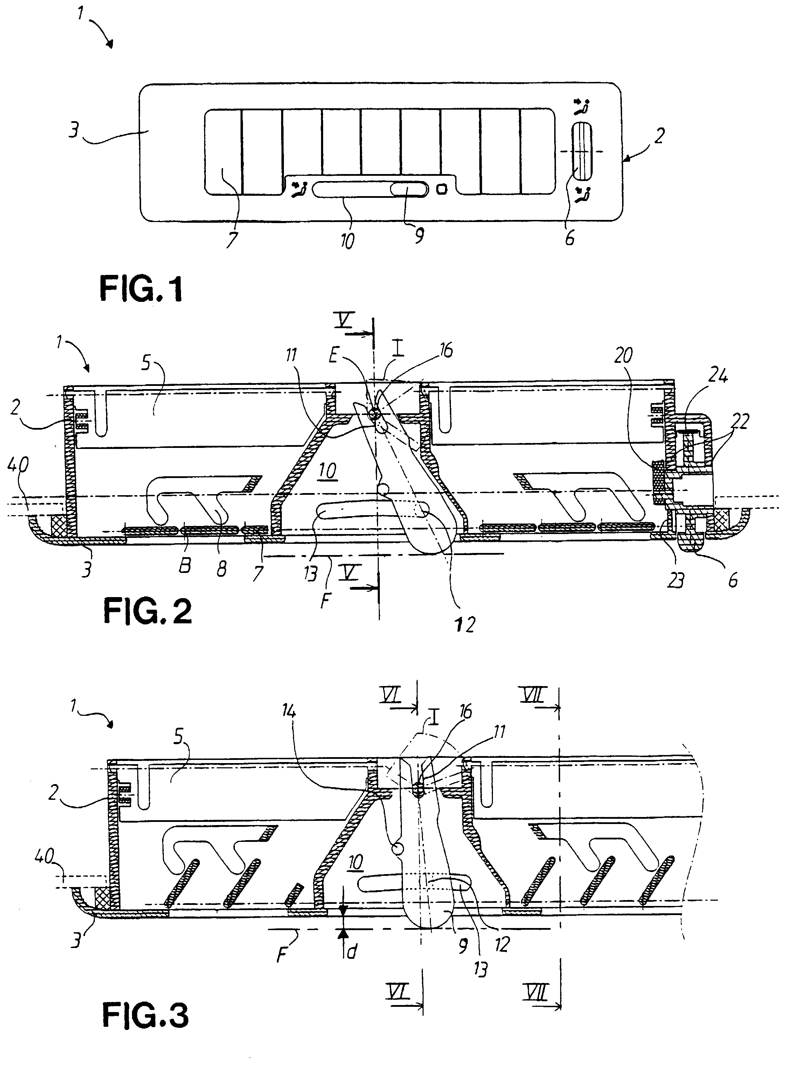

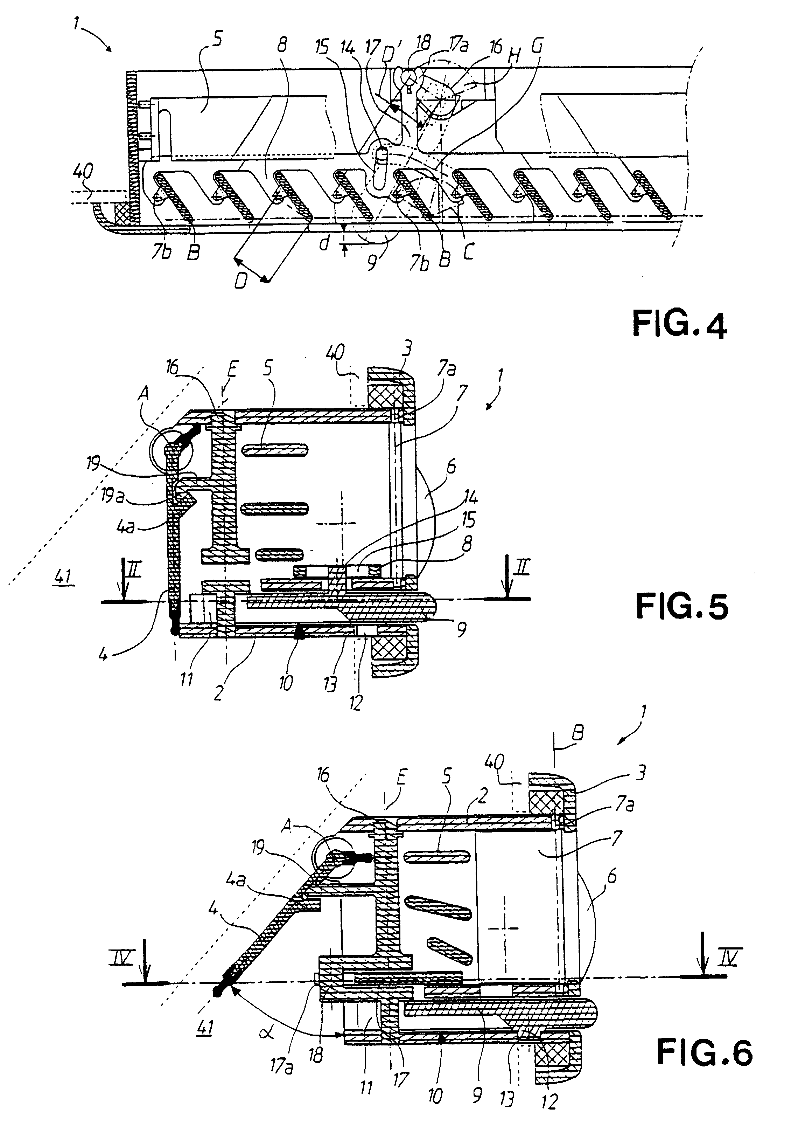

En référence aux figures, le barillet d'aérateur 1 selon l'invention comporte un boîtier 2 monté dans l'habitacle d'un véhicule automobile, soit dans la planche de bord 40 ou dans le plafonnier, à la sortie d'un conduit d'air 41, le barillet étant habillé en face avant par une paroi frontale 3. Ce boîtier 2 comporte un volet d'obturation 4 du conduit d'air, pivotant vers l'arrière du barillet suivant un axe de pivotement A entre une position fermée dans laquelle le volet ferme le fond du boîtier 2 et une position ouverte dans laquelle le volet est écarté du fond du boîtier d'un angle a pour laisser passer l'air. Le boîtier 2 comporte un premier jeu d'ailettes 5 d'orientation du flux d'air, parallèles, placées par exemple horizontalement à l'intérieur du boîtier 2, ces ailettes 5 étant reliées entre elles et couplées à une molette de commande 6 accessible en face avant du barillet 1. Le boîtier 2 comporte également un second jeu d'ailettes 7 d'orientation du flux d'air, parallèles, placées par exemple verticalement à l'avant du boîtier 2, ces ailettes 7 étant reliées entre elles par une barrette de liaison 8 couplée à un levier de commande 9 accessible en face avant du barillet 1. Les ailettes verticales 7 sont montées pivotantes dans le boîtier 2 par des tenons 7a logés dans des orifices correspondant et définissant leurs axes de pivotement B. Dans les figures 1, 2 et 5, les ailettes verticales 7 sont en position fermée, dans les figures 3, 6, 7 et 8, elles sont en position semi-ouverte et dans la figure 4, elles sont en position ouverte. La barrette de liaison 8 est couplée aux ailettes verticales 7 en des points de liaison 7b distants des axes de pivotement B des ailettes d'une distance D, ces points de liaison 7b décrivant chacun une trajectoire circulaire dont le centre est l'axe de pivotement B de l'ailette correspondante limitée à un secteur angulaire C représenté en traits interrompus courts, pour déplacer les ailettes 7 de leur position fermée à leur position ouverte et inversement. Le levier de commande 9 est monté dans un logement 10 prévu à l'intérieur du boîtier 2, guidé en rotation dans une fente 11 prévue à son extrémité arrière qui pivote et coulisse autour d'un axe de pivotement E solidaire du boîtier 2 et guidé en translation par un plot 12 prévu dans une zone avant du levier 9 qui coulisse dans une lumière 13 légèrement courbe prévue dans ledit boîtier 2, de telle manière que l'extrémité avant du levier 9 suit une trajectoire rectiligne F parallèle à la face avant du barillet 1. Par conséquent, quelle que soit la position du levier 9 celui-ci dépasse de la face avant d'une valeur constante d, par exemple de 3,2 mm, ce qui est conforme à la norme en vigueur. La configuration du levier 9 permet d'avoir un bras de levier important favorisant ainsi la multiplication de l'effort de manoeuvre appliqué au levier, favorisant ainsi le confort d'utilisation du barillet 1. Ce levier 9 est relié à la barrette de liaison 8 par un plot 14 prévu dans une zone médiane du levier 9 sur le côté gauche par exemple de manière à être décalé par rapport à la droite passant par l'axe de pivotement E du levier et son plot 12 de guidage en translation, pour faciliter la transmission de l'effort de manoeuvre. Ce plot 14 se déplace dans une lumière transversale 15 prévue dans la barrette de liaison 8 et sa trajectoire est symbolisée par la courbe G en traits interrompus courts. Ce levier 9 est encore relié à un arbre de commande 16 du volet 4 d'obturation du conduit d'air, cet arbre de commande 16 étant monté dans le boîtier 2 perpendiculairement au plan dans lequel se déplace le levier de commande 9 autour d'un axe de rotation correspondant à l'axe de pivotement E dudit levier. Le mouvement de translation du levier 9 est transformé en un mouvement de rotation sur l'arbre de commande 16 du volet 4 par l'intermédiaire d'un bras de transmission 17 solidaire de la barrette de liaison 8 et couplé à un maneton excentrique 18 prévu sur cet arbre 16. Le bras de transmission 17 s'étend perpendiculairement à la barrette de liaison 8 et est terminé par un oeillet 17a ouvert qui s'emboîte autour du maneton excentrique 18. L'entraxe D' prévu entre l'axe de pivotement E de l'arbre de commande 16 et le maneton excentrique 18 est égal à la distance D prévue entre les axes de pivotement B des ailettes 7 et leurs points de liaison 7b avec la barrette de liaison 8, étant donné que le maneton excentrique 18 décrit le même déplacement circulaire que les points de liaison 7b, ce déplacement étant représenté par le secteur angulaire H en traits interrompus courts. L'arbre de commande 16 comporte une came 19 qui se projette perpendiculairement à son axe de pivotement E et qui coopère avec le volet d'obturation 4 de telle manière, que lors de la rotation de l'arbre de commande 16 dans le sens d'ouverture, le volet 4 s'ouvre sous l'action de la came 19. Cette came 19 comporte un profil de came croissant rapidement jusqu'à l'ouverture complète du volet 4 puis constant pour le maintenir à son ouverture complète. La transmission du mouvement de translation du levier de commande 9 à l'arbre de commande 16 du volet 4 est réalisée de telle manière que lors de l'ouverture des ailettes 7, le volet 4 s'ouvre rapidement pour autoriser le passage du flux d'air. Par exemple, quand les ailettes 7 sont en position semi-ouverte (figure 3), le levier 9 n'étant pas encore dans sa position centrale, le volet 4 est ouvert complètement. Le profil de came I est représenté sur les figures 2 et 3 en traits interrompus courts et comporte un premier secteur en plan incliné et un second secteur circulaire. En position fermée, la came 19 comporte une extrémité recourbée 19a qui s'emboîte dans un cran ou une rainure 4a prévu sur le volet 4 et qui le ramène et le retient en position fermée. Bien entendu d'autres systèmes d'ouverture du volet 4 peuvent être utilisés. Par exemple, le profil de came peut être remplacé par une rainure qui reçoit un doigt prévu sur le volet ou inversement.

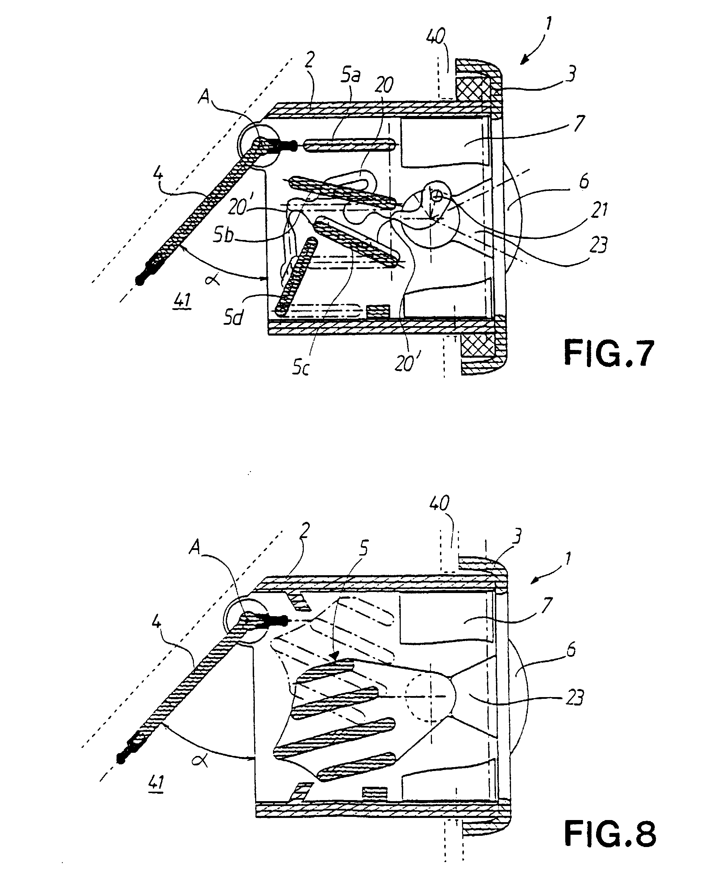

Le jeu d'ailettes horizontales 5 prévu à l'intérieur du boîtier 2 du barillet 1 est par exemple réalisé en référence à la figure 7. L'ailette horizontale supérieure 5a est fixe et les autres ailettes horizontales 5b, 5c et 5d sont liées entre elles par un organe de liaison charnière 20 couplé à la molette de commande 6 par un point de fixation 21 excentré par rapport à l'axe de rotation de la molette. La rotation de la molette 6 entraîne la déformation de l'organe de liaison charnière 20 notamment à ses zones charnières 20' formées par des zones de moindre épaisseur, entraînant les ailettes 5b, 5c et 5d dans des positions plus ou moins inclinées. Le jeu d'ariettes horizontales 5, l'organe de liaison charnière 20 et la molette de commande 6 sont montés dans le boîtier 2 avant la mise en place des ailettes verticales 7. La molette 6 est guidée en rotation dans un logement 22 prévu dans le boîtier 2 et maintenue dans ce logement par un doigt de maintien 23 adapté, prévu à l'arrière de la paroi frontale 3. La molette 6 est freinée par une lame ressort 24 permettant de stabiliser sa position angulaire.

Le jeu d'ailettes horizontales 5 peut aussi être réalisé par exemple en référence à la figure 8. Les ailettes horizontales 5 sont réalisées d'une seule pièce avec la molette de commande 6. Dans ce cas, il s'agit d'une réalisation très simple, l'ensemble formé par les ailettes 5 et molette 6 étant monté dans le boîtier 2 avant la mise en place des ailettes verticales 7. La rotation de la molette 6 entraîne instantanément le déplacement de l'ensemble des ailettes horizontales 5 vers le haut ou vers le bas. Le montage de la molette 6 dans le boîtier 2 est similaire à la réalisation précédente illustrée par la figure 7.

Le fonctionnement d'un tel barillet d'aérateur 1 est très simple. En position fermée, les ailettes verticales 7 et visibles en face avant sont fermées, le volet 4 du conduit d'air aussi et le levier de commande 9 est dans une de ses positions extrêmes, par exemple à droite. Pour ouvrir le barillet d'aérateur 1, il suffit de manoeuvrer le levier de commande 9 en direction de son autre position extrême, par exemple à gauche. Lors de ce déplacement, les ailettes verticales 7 s'ouvrent et, simultanément, le volet 4 du conduit d'air aussi. A mi-course du levier 9 et des ailettes 7, le volet 4 est totalement ouvert de manière à fournir un maximum d'air (figure 3) et ceci grâce au profil de came I croissant. En continuant à manoeuvrer le levier 9, les ailettes 7 continuent à s'ouvrir jusqu'à leur ouverture totale illustrée par la figure 4, le volet 4 restant en position ouverte grâce au profil de came I constant. La configuration des ailettes 7 et de la barrette de commande 8 autorise un large débattement des ailettes par exemple sur un angle de 125°, ce qui permet d'offrir une grande directivité du flux d'air. Ce flux d'air peut être également dirigé en manoeuvrant la molette de commande 6 des ailettes intérieures 5, vers le haut ou vers le bas. En manoeuvrant le levier de commande 9 dans le sens inverse de gauche à droite, on modifie la position angulaire des ailettes verticales 7 et dans la deuxième moitié de sa course, le volet 4 se referme jusqu'à être totalement fermé quand les ailettes 7 sont elles aussi fermées.

La description ci-dessus montre que l'invention permet d'atteindre les objectifs prévus de manière simple et pour un meilleur confort de l'utilisateur en respectant les normes en vigueur. Bien entendu, la présente invention n'est pas limitée à l'exemple de réalisation décrit mais s'étend à toute modification et variante évidente pour un homme du métier. La forme et les dimensions des différentes pièces peuvent varier. De même, les différentes trajectoires peuvent être modifiées par exemple en déplaçant les points de liaison et de pivot de même que les entraxes.

## Revendications

1. Barillet d'aérateur (1) pour un véhicule automobile comportant un boîtier (2) monté dans l'habitacle du véhicule à la sortie d'un conduit d'air, ce boîtier (2) étant pourvu d'un volet d'obturation (4) du conduit d'air, d'un premier jeu d'ailettes (5) parallèles d'orientation du flux d'air disposé par exemple horizontalement à l'intérieur du boîtier et d'un second jeu d'ailettes (7) parallèles d'orientation du flux d'air disposé par exemple verticalement à l'avant du boîtier, ces ailettes verticales (7) étant montées pivotantes dans le boîtier (2) autour d'axes de pivotement (B) et reliées entre elles par une barrette de liaison (8) en des points de liaison (7b) distants des axes de pivotement (B) d'une distance D, cette barrette de liaison (8) étant couplée à un levier de commande (9) accessible en face avant du barillet (1) et une paroi frontale (3) terminant le montage du barillet (1) dans l'habitacle, caractérisé en ce que le levier de commande (9) est couplé simultanément à la barrette de commande (8) des ailettes verticales (7) et à un arbre de commande (16) du volet d'obturation (4) du conduit d'air, au moyen respectivement d'une articulation (14, 15) prévue entre le levier (9) et la barrette de liaison (8) et d'un maneton excentrique (18) prévu entre le levier (9) et l'arbre de commande (16), de telle manière à fermer le volet (4) quand les ailettes verticales (7) sont fermées, à ouvrir le volet (4) dans une première phase d'ouverture des ailettes verticales (7) et à le maintenir en position ouverte jusqu'à l'ouverture complète des ailettes (7).

2. Barillet selon la revendication 1, caractérisé en ce que le levier de commande (9) est guidé en rotation à son extrémité arrière autour de l'arbre de commande (16) du volet (4), et en translation dans sa partie avant par un plot (12) solidaire du levier (9) coulissant dans une lumière (13) prévue dans le boîtier (2), de telle manière que l'extrémité avant du levier (9) se déplace suivant une trajectoire sensiblement rectiligne et sensiblement parallèle à la face avant du barillet (1).

3. Barillet selon la revendication 2, caractérisé en ce que l'arbre de commande (16) du volet (4) est monté pivotant dans le boîtier (2) suivant un axe de pivotement (E) perpendiculaire au plan dans lequel se déplace le levier (9) et comporte le maneton excentrique (18) couplé à la barrette de liaison (8) par un bras de transmission (17), le maneton excentrique (18) étant éloigné de l'axe de pivotement (E) de l'arbre de commande (16) d'une distance D' égale à la distance D existante entre les axes de pivotement (B) des ailettes verticales (7) et leurs points de liaison (7b) sur la barrette de liaison (8).

4. Barillet selon la revendication 3, caractérisé en ce que l'arbre de commande (16) comporte des moyens d'ouverture et de fermeture du volet (4) du conduit d'air.

5. Barillet selon la revendication 4, caractérisé en ce que les moyens d'ouverture et de fermeture du volet (4) comportent une came (19) disposée perpendiculairement à l'axe de pivotement (E) de l'arbre de commande (16) et pourvue d'un profil de came (I) qui est croissant dans une première phase puis constant dans une seconde phase, ce profil de came (I) comportant au départ une extrémité recourbée (19a) coopérant avec une rainure (4a) de forme complémentaire prévue sur le volet (4) pour ramener et maintenir ce dernier en position fermée.

6. Barillet selon la revendication 4, caractérisé en ce que les moyens d'ouverture et de fermeture du volet (4) comportent un doigt solidaire de l'arbre de commande coulissant dans une rainure dont la courbe est similaire à un profil de came prévue sur le volet ou inversement.

7. Barillet selon la revendication 2, caractérisé en ce que l'articulation prévue entre le levier (9) et la barrette de liaison (8) comporte un plot (14) solidaire du levier et coulissant dans une lumière transversale (15) prévue dans la barrette, ce plot (14) étant prévu dans une zone médiane du levier et décalé par rapport à la droite passant par l'axe de pivotement (E) du levier (9) et son plot (12) de guidage en translation.

8. Barillet selon la revendication 1, caractérisé en ce que toutes ou une partie des ailettes intérieures horizontales (5) sont fabriquées d'une seule pièce avec une molette de commande (6) montée dans le boîtier (2) et accessible en face avant du barillet (1), la molette étant maintenue en position par un doigt de maintien (23) prévu à l'arrière de la paroi frontale (3).

9. Barillet selon la revendication 1, caractérisé en ce que les ailettes intérieures horizontales (5) sont couplées à une molette de commande (6) montée dans le boîtier (2) et accessible en face avant du barillet (1) par un organe de liaison charnière (20), cet organe étant couplé à la molette (6) par un point de fixation (21) excentré par rapport à l'axe de rotation de la molette (6).

10. Barillet selon la revendication 9, caractérisé en ce que l'organe de liaison charnière (20) est réalisé dans une matière synthétique moulée et comporte plusieurs zones charnières (20') formées par des zones de moindre épaisseur de matière.
